# EUROPÄISCHE PATENTANMELDUNG

(11) **EP 1 256 555 A2**
(43) Veröffentlichungstag der Anmeldung: **13.11.2002**
(21) Anmeldenummer: 02010432.9
(22) Anmeldetag: 08.05.2002
(51) Int. Cl.: C03C 3/155

(54) **Optische Gläser und ihre Verwendung**

(30) Priorität: 08.05.2001 DE 10122263
(71) Anmelder: Schott Glas, 55122 Mainz (DE); CARL-ZEISS-STIFTUNG trading as SCHOTT GLAS, 55122 Mainz (DE)
(72) Erfinder: Wolff, Silke, Dr., 42499 Hückeswagen (DE); Wölfel, Ute, 55130 Mainz (DE); Siepe, Ulrich, 65197 Wiesbaden (DE)

(57) **Zusammenfassung**

Die vorliegende Erfindung betrifft die Verwendung optischer Gläser mit einem Brechwert n_{d} ≥ 1,70, einer Abbezahl υ_{d} ≥ 35 und einer Dichte ρ ≤ 4,5 g/cm³, sowie optische Elemente mit derartigen Eigenschaften. Ferner betrifft die vorliegende Erfindung Glaszusammensetzungen, mit welchen derartige Eigenschaften erreicht werden können.

## Beschreibung

Die vorliegende Erfindung betrifft die Verwendung optischer Gläser mit einem Brechwert n_{d} ≥ 1,70, einer Abbezahl υ_{d} ≥ 35 und einer Dichte ρ ≤ 4, g/cm³, sowie optische Elemente mit derartigen Eigenschaften. Ferner betrifft die vorliegende Erfindung Glaszusammensetzungen, mit welchen derartige Eigenschaften erreicht werden können.

Im Applikationsfeld "Optischer Datentransfer/Abbildung/Telekommunikation" geht der Trend in Richtung immer kleinerer Geräte-Layouts und höherer Datentransferraten. Zudem wird die traditionelle "Read-Only-Technologie" in sämtlichen Sektoren dieses Applikationsfeldes immer stärker durch "Read&Write-Technologien" verdrängt. Dadurch verändern sich die an die optischen Systeme und damit die an die optischen Materialien gestellten Anforderungen.

Während Read-Only-Technologien in den beiden sowohl zeitlich als auch räumlich voneinander streng separierten Betriebsarten (Schreiben bzw. Lesen) gerade aufgrund dieser Separation im monochromatischen Modus betrieben werden können, also der Schreibprozess mit Licht der gleichen Wellenlänge durchgeführt werden kann wie der im späteren Betrieb ausschließlich erfolgende Leseprozess, ist dies für die Read&Write-Technologien nicht möglich. Hier muss die Wellenlänge des energiereicheren Schreibstrahls von der des energieärmeren Lesestrahls um derzeit mindestens 2 bis 5 nm zu niedrigeren Zahlenwerten hin abweichen. Ansonsten könnten im Gerät nicht beide Modi vom selben optischen Kopf aus betrieben werden, wodurch der systemische Aufwand und damit die Größe und die Kosten solcher Geräte inakzeptabel groß würden.

Diese Wellenlängendifferenzierung resultiert aus der Notwendigkeit, Lese- und Schreibstrahl im optischen System sauber voneinander separieren zu können, um gravierende Abbildungsfehler durch Interferenz- und Restlichteffekte auszuschließen. Je geringer die Differenz zwischen den beiden Wellenlängen gehalten werden kann, um eine vollständige Separation zu erhalten, desto einfacher ist ein solches optisches System zu realisieren. Der Begriff "einfach" bezieht sich auf den Umfang der notwendigen optischen Komponenten und damit sowohl auf die minimale Baugröße des Moduls als auch auf den Kostenrahmen.

Die minimale, zur vollständigen Trennung erforderliche Wellenlängendifferenz ist jedoch abhängig von der Dispersion der glasigen Komponenten im optischen System. Je höher die Dispersion, also je geringer die Abbe-Zahl ist, desto weiter werden die beiden niemals ideal-monochromatischen Strahlen räumlich aufgefächert, bis sie sich schließlich überlagern, was der angestrebten Trennung widerspricht. Im Umkehrschluss bedeutet dies, dass bei den Gläsern umso geringere Wellenlängendifferenzen umgesetzt werden können, je geringer ihre Dispersion ist. Aus einer geringen Dispersion ergibt sich noch ein weiterer Vorteil: Es kann bei gleich bleibender Wellenlängendifferenz bei deutlich kleineren Wellenlängen gearbeitet werden. Allgemein wirkt sich die Dispersion auf Strahlen geringerer Wellenlängen stärker aus. Bei herkömmlichen Gläsern mit höherer Dispersion ergibt sich hieraus neben der größeren minimalen Wellenlängendifferenz noch eine erhöhte minimal mögliche Wellenlänge im Vergleich zu niedrigdispersiven Glastypen. Ein Arbeitsbereich bei geringeren Wellenlängen ist bei dem genannten Applikationsfeld bevorzugt, denn je geringer die Arbeitswellenlängen sind, desto dichter können Informationen pro Flächeneinheit des Datenträgermaterials auf diesem gepackt werden. So wird, neben der maximierten Informationsdichte, die Zugriffszeit durch kürzere Wege minimiert.

Weiter ist die Brechwertlage von Bedeutung für die Praktikabilität des optischen Systems: Die eigentlichen Pick-Up-Linsen bestimmen durch ihren Brechwert neben den Absolutwellenlängen der Schreib-Lese-Strahlen die Brennweite des Systems entscheidend mit. Je geringer die Brennweite eines solchen Systems ist, desto geringer sind seine geometrischen Ausmaße und damit die Bauteilgröße, sowie Gewicht und Kosten. Ein hoher Brechwert im für die jeweilige Applikation entscheidenden Wellenlängenbereich ist also wesentlich. Ein weiterer Vorteil eines hohen Brechwerts liegt darin, dass die asphärische Beschichtung der Pick-Up-Linsen vergleichsweise dünn sein kann. Geringe Brechwerte des Glases würden große Schichtdicken erfordern, um den gewünschten Effekt zu erzielen. Die nötige Schichtdicke geht wiederum direkt in Parameter wie die zur Beschichtung notwendige Prozessschrittzahl und damit in Aufwand und Kosten ein. Weiter sind hohe Transmissionen im Arbeitswellenlängenbereich des Systems wesentlich. Je geringer die Transmissivität der Gläser bei den Arbeitswellenlängen ist, desto schlechter ist die Lichtausbeute des Systems. Da die Lichtintensität aber direkt in die Schreib-Lese-Qualität des Systems eingeht, werden Lichtquellen höherer Leistung und, damit verbunden, zusätzliche Kühlaggregate erforderlich, wodurch wiederum Kosten und Aufwand erhöhen würden.

Neben den genannten optischen Eigenschaften sind für diese Anwendung auch weitere physikalische und chemische Eigenschaften der Gläser wichtig. Das sind insbesondere eine geringe Dichte und eine gute Beschichtbarkeit, insbesondere mit organischen Materialien.

Die Dichte der optischen Materialien dieser Systeme ist von großer Bedeutung. Die Pick-Up-Linsen als Bestandteile der Schreib-Lese-Köpfe sind bewegliche Elemente des Systems. Die Köpfe bewegen sich zum eigentlichen Datentransfer über den Datenträger. Die Zugriffszeiten und Spurdichten sind damit von der Möglichkeit zur schnellen und exakten Positionierung der Köpfe abhängig. Je höher nun die Dichte der Glasbauteile, desto größer ist die Masse der mobilen Einheit, welche dadurch träger und damit langsamer zu positionieren wird. Aus diesem Grund muss die Dichte der erfindungsgemäßen Gläser signifikant kleiner als die herkömmlicher optischer Gläser sein.

Die asphärische Beschichtung der Linsen umfasst in der Regel organisches Material. Um eine ausreichend gute Haftung der optischen Schicht am Basisglas zu erhalten, muss das Material organisch bindungs- oder stark adhäsionsfähige Komponenten in ausreichender Menge enthalten.

Der Patentliteratur sind bereits einige Schriften zu entnehmen, in denen Gläser mit optischen Werten n_{d} und ν_{d} aus den genannten oder angrenzenden Bereichen beschrieben werden. Jedoch zeigen jene Gläser die verschiedensten Nachteile:

DE-AS 10 61 976 beschreibt Gläser aus dem Dreistoffsystem B₂O₃-SiO₂-La₂O₃. Diese Gläser, bestehend aus Grundglas und zahlreichen zusätzlichen Komponenten, variieren stark in ihrer Zusammensetzung. Sie sind jedoch sowohl GeO₂- als auch Yb₂O₃-frei. Sie werden nicht gut beschichtbar sein. Gleiches gilt für die Gläser der DE 31 02 690 A1, für die Gläser der DE-AS 26 52 747 aus dem System B₂O₃-La₂O₃-Y₂O₃-TiO₂ und für die Gläser aus dem System B₂O₃-Gd₂O₃-La₂O₃ aus DE 22 65 703 C2.

Die Gläser der JP 53 - 25323 A weisen dagegen hohe Yb₂O₃-Gehalte von bis zu 40 Gew.-% und ausweislich der Beispiele hohe Ta₂O₅-Gehalte oder hohe Erdalkalioxidanteile auf. Aufgrund des extrem hohen Yb₂O₃-Gehalts weisen diese Gläser eine hohe Kristallisationstendenz auf.

Die in US 4,166,746 und JP 59-1955523 A beschriebenen Gläser weisen nicht die vorteilhafte Kombination einer geringen Dichte bei gleichzeitig geringer Dispersion und hohem Brechwert auf.

Somit bestand die Aufgabe der vorliegenden Erfindung insbesondere in der Bereitstellung optischer Gläser, sowie daraus hergestellten optischen Elementen, welche die vorstehenden Anforderungen insbesondere im Bereich des Anwendungsfelds Read&Write-System erfüllen können.

Die vorstehende Aufgabe wird durch die in den Ansprüchen beschriebenen Ausführungsformen der vorliegenden Erfindung gelöst.

Insbesondere betrifft die vorliegende Erfindung ein optisches Element für Vorrichtungen für optischen Datentransfer, umfassend ein Glas mit einem Brechwert n_{d} ≥ 1,70, einer Abbezahl υ_{d} ≥ 35 und einer Dichte ρ ≤ 4,5 g/cm³.

Vorzugsweise beträgt die Dichte des Glases dabei ρ ≤ 4,5 g/cm³, mehr bevorzugt ρ ≤ 4,3 g/cm³, noch bevorzugter ρ ≤ 4,2 g/cm³.

Vorzugsweise beträgt der Brechwert des Glases dabei n_{d} ≥ 1,71, mehr bevorzugt n_{d} ≥ 1,73, besonders bevorzugt n_{d} ≥ 1,75

Vorzugsweise beträgt die Abbezahl des Glases dabei υ_{d} ≥ 40, besonders bevorzugt υ_{d} ≥ 45.

Hierbei ist aber zu beachten, dass je nach Anwendung beispielsweise eine Abbezahl von υ_{d} ≥ 35 ausreichend sein kann, wenn das Glas eine besonders geringe Dichte von beispielsweise ρ ≤ 4,0 g/cm³ aufweist. Auch eine solche Ausführungsform, sowie weitere vorteilhafte Kombinationen sind bevorzugt.

Optische Elemente können dabei beispielsweise Linsen, wie sphärische oder asphärische Linsen, Kugellinsen oder Halbkugellinsen, Prismen verschiedener Geometrien, sowie sogenannte Kompaktbauteile sein. Kompaktbauteile sind dabei Bauteile, welche linsen- und/oder prismenförmige Formen umfassen.

Erfindungsgemäß wurde festgestellt, dass sich insbesondere die im folgenden näher erläuterten vier Klassen optischer Gläser sowohl zu derartigen Bauteilen verarbeitet werden können als auch die erforderlichen Eigenschaften hinsichtlich Brechwert, Abbezahl und Dichte ausweisen und daher zur Herstellung der erfindungsgemäßen optischen Elemente geeignet sind.

Die vorliegende Erfindung betrifft daher auch die Verwendung optischer Gläser mit einem Brechwert n_{d} ≥ 1,70, einer Abbezahl υ_{d} ≥ 35 und einer Dichte ρ ≤ 4,5 g/cm³ für den optischen Datentransfer, insbesondere für Read&Write-Anwendungen, beispielsweise für Read&Write-Vorrichtungen mit mechanisch beweglichen Schreib-Lese-Köpfen.

Überraschenderweise hat sich herausgestellt, dass optische Elemente, welche die nachstehend näher erläuterten Gläser umfassen, auch für energiereiche Strahlung im blauvioletten Spektralbereich, wie beispielsweise 405 nm, geeignet sind.

Als optische Gläser für die erfindungsgemäßen optischen Elemente sind insbesondere Gläser der folgenden vier Klassen geeignet. Die vorliegende Erfindung betrifft daher weiter die Verwendung der nachstehend näher erläuterten optischen Gläser auf dem Gebiet des optischen Datentranfers, insbesondere für Pick-Up-Linsen für Read- oder Write-Only-Technologien, vorzugsweise für Read&Write-Technologien.

Bei den ersten beiden Klassen von Gläsern handelt es sich um neuartige Gläser, welche die vorstehend beschriebenen Eigenschaften aufweisen und welche für die erfindungsgemäßen optischen Elemente bzw. die erfindungsgemäße Verwendung besonders geeignet sind.

Die vorliegende Erfindung betrifft daher auch Gläser der nachstehend beschriebenen ersten zwei Klassen von Gläsern.

Die ersten zwei Klassen von Gläsern entstammen dem Lanthanboratglassystem. Der La₂O₃-Anteil beträgt dabei 30 - 55 Gew.-%, der B₂O₃-Anteil 20 - 40 Gew.-%. Dabei dient das Boroxid dem Lanthanoxid, durch das der hohe Brechwert bei gleichzeitig hoher Abbezahl erzielt wird, als Lösungsmittel. Um dafür genügend B₂O₃ bereitzustellen, beträgt in bevorzugten Ausführungsformen das Gewichtsverhältnis La₂O₃/B₂O₃ höchstens 1,5, in besonders bevorzugten Ausführungsformen höchstens 1,4. Insbesondere in SiO₂-reichen Gläsern könnte es bei zu hohem La₂O₃/B₂O₃-Verhältnis zu Entmischungseffekten und Kristallisationserscheinungen kommen.

Bei zu hohen B₂O₃-Gehalten, insbesondere im Zusammenhang mit niedrigen La₂O₃-Gehalten würden die chemischen Beständigkeiten schlecht und würde es bei der Produktion zu starken Verdampfungserscheinungen kommen. Auch würde die bei gleicher Temperatur geringere Viskosität durch die höheren Migrationsgeschwindigkeiten der Komponenten die Kristallisationsneigung erhöhen. So beträgt das Gewichtsverhältnis La₂O₃/B₂O₃ vorzugsweise wenigstens 1,0. Bei einem zu niedrigen La₂O₃-Gehalt würden die gewünschten optischen Lagen nicht erreicht.

Zur Verbesserung der Kristallisationsbeständigkeit können die Gläser bis zu 5 Gew.-% des weiteren Glasbildners Al₂O₃ enthalten. Ein höherer Al₂O₃-Gehalt würde die Abbezahl absenken und die Schmelzbarkeit der Gläser verschlechtern. Die Gläser können zur Verbesserung der Kristallisationsbeständigkeit außerdem bis zu 10 Gew.-% ZnO, vorzugsweise bis zu 8 Gew.-% enthalten. Ein höherer ZnO-Gehalt würde den Brechwert zu sehr absenken. Der ZnO Gehalt beträgt vorzugsweise mindestens 2 Gew.-%, mehr bevorzugt mindestens 3 Gew.-%.

Die Gläser enthalten 0 bis 10 Gew.-% Nb₂O₅, 0 bis 11 Gew.-% Y₂O₃ und/oder 0 bis 10 Gew.-% ZrO₂. Alle drei Komponenten dienen dazu, bei hohen Brechwerten geringe Dispersionen, also hohe Abbezahlen zu erreichen. Höhere Anteile an Y₂O₃ und Nb₂O₅ würden das Gemenge stark verteuern. Auch würden höhere Anteile an Y₂O₃ einen Gelbstich hervorrufen. Höhere Anteile an ZrO₂ und an Nb₂O₅ würden in diesen hoch Lanthanoxid-haltigen Glaszusammensetzungen die Kristallisationsneigung zu sehr erhöhen, da die Komponenten als Keimbildner fungieren können. Durch das gleichzeitige Vorhandensein aller drei Komponenten werden die genannten Nachteile durch antagonistische Effekte minimiert. Vorzugsweise beträgt die Summe aus Nb₂O₅, Y₂O₃ und ZrO₂ wenigstens 2 Gew.-%, mehr bevorzugt mindestens 5 Gew.-%.

Die Gläser können 0 bis 8 Gew.-% SiO₂, 0 bis 15 Gew.-% GeO₂ und 0 bis 5 Gew.-% PbO enthalten.

Durch diese Komponenten wird die Fähigkeit der Gläser, organische Schichten zu adsorbieren, erhöht. Außerdem erhöht PbO den Brechwert.

Vorzugsweise beträgt die Summe aus SiO₂, GeO₂ und PbO wenigstens 2 Gew.-%. Der Anteil an PbO ist auf den genannten Höchstwert beschränkt, da es die Abbezahl stark absenkt und die Dichte erhöht. SiO₂ würde bei zu hohen Anteilen eine Entmischung des Lanthanboratglases fördern und würde den Brechwert zu sehr absenken.

Gleiches gilt, jedoch nur in abgeschwächtem Maß, für GeO₂. Daher ist das Vorhandensein von GeO₂ gegenüber SiO₂ bevorzugt.

Schon geringe Anteile an GeO₂ von 0,5 Gew.-% bewirken eine Strukturänderung im Glas, welche die Erhöhung des SiO₂-Gehalts ermöglicht. Durch den auf diese Weise erhöhten Glasbildneranteil kann eine erhöhte Menge Nb₂O₅ zugegeben werden, ohne das dies zur Kristallisation des Glases führt.

Weiter können die Gläser Yb₂O₃ enthalten, und zwar bis zu 5 Gew.-%.

Auch Yb₂O₃ hebt den Brechwert. Der gewünschte Wert kann in der konkreten Glaszusammensetzung mit Hilfe der beiden diesbezüglich gegenläufigen Komponenten GeO₂ und Yb₂O₃ variiert werden. Daher beträgt die Summe aus GeO₂ und Yb₂O₃ wenigstens 0,1 Gew.-%, vorzugsweise wenigstens 0,5 Gew.- %. Die maximale Zugabe von Lanthanoxid wird durch seine begrenzte Löslichkeit in der Boratglasmatrix beschränkt. Yb₂O₃ hat vergleichbare Eigenschaften und wird daher ergänzend eingesetzt.

Die weiteren fakultativen Komponenten TiO₂ (0 - 5 Gew.-%), MgO (0 - 8 Gew.-%), CaO (0 - 8 Gew.-%), BaO (0 - 8 Gew.-%), SrO (0 - 8 Gew.-%), Gd₂O₃ (0 - 5 Gew.-%) sind hilfreich für die Feineinstellung der optischen Lage, wobei MgO, CaO und SrO die Abbezahl erhöhen, BaO den Brechwert hebt und TiO₂ den Brechwert hebt, aber die Abbezahl senkt. Außerdem wirken sich MgO, CaO und SrO positiv auf die gewünschte niedrige Dichte aus. Die Summe aus MgO, CaO, SrO und BaO ist vorzugsweise auf 10 Gew.-%, insbesondere auf 8 Gew.-%, beschränkt.

Weiter können die Gläser bis zu 10 Gew.-% an Alkalioxiden, also Li₂O, Na₂O, K₂O, Rb₂O, Cs₂O enthalten. Dadurch kann der Brechwert angepasst und die Schmelzbarkeit verbessert werden, was insbesondere für die hochschmelzenden Gläser, also vor allem die hoch lanthanoxid- und glasbildnerhaltigen Gläser, von Bedeutung ist. Es ist bevorzugt, dass der genannte Alkaligehalt von 0 bis 10 Gew.-% durch die Oxide Li₂O und/oder Na₂O und/oder K₂O realisiert wird. Es ist besonders bevorzugt, dass der Gehalt an Li₂O + Na₂O + K₂O 0 bis 8 Gew.-% beträgt.

Im folgenden werden die ersten zwei Klassen von Gläsern im einzelnen beschrieben. Die Gläser der ersten beiden Klassen zeichnen sich dadurch aus, dass sie organische Schichten besonders verlässlich adsorbieren.

Die erste Klasse von Gläsern stellt einen PbO-haltige Gläser betreffenden Zusammensetzungsbereich mit (in Gew.-% auf Oxidbasis): La₂O₃ 30 - 45, besonders bevorzugt 32 - 42; B₂O₃ 30 - 40; PbO 0,1 - 5, besonders bevorzugt 0,5 - 4; MgO 0 - 8; CaO 0 - 8; SrO 0 - 8; BaO 0 - 8; mit MgO + CaO + SrO + BaO 0 - 10, ganz besonders bevorzugt 0 - 8; ZnO 1 - 10, besonders bevorzugt 2 - 8; TiO₂ 0 - 5, besonders bevorzugt 0 - 2; ZrO₂ 1 - 10, besonders bevorzugt 3 -10; Y₂O₃ 1 - 8, besonders bevorzugt 1 - 5; Yb₂O₃ 0,1 - 5, besonders bevorzugt 0,5 - 2; Gd₂O₃ 0,1 - 5, bevorzugt 0,1 - 3; Nb₂O₅ 0,1- 10, bevorzugt 2 -10, besonders bevorzugt 4 - 10, dar.

Diese Gläser besitzen Brechwerte n_{d} ≥ 1,74, Abbezahlen ν_{d} ≥ 40 und Dichten ρ ≤ 4,5 g/cm³. Gläser aus dem als besonders bevorzugt genannten Bereich besitzen Brechwerte n_{d} ≥ 1,76; Abbezahlen ν_{d} ≥ 42 und Dichten ρ ≤ 4,2 g/cm³. Da die Löslichkeit des Lanthanoxids in der bleihaltigen Boratglasmatrix geringer ist als in bleifreien Varianten, ist bei diesen bleihaltigen Gläsern auch Yb₂O₃ eine stets vorhandene Komponente.

Beispielsweise können Gläser dieser ersten Klasse die folgende Zusammensetzung (in Gew.-% auf Oxidbasis) aufweisen:

| | |
|---|---|
| La₂O₃ | 30 - 45 |
| B₂O₃ | 30 - 40 |
| PbO | 0,1 - 5 |
| MgO | 0 - 8 |
| CaO | 0 - 8 |
| SrO | 0 - 8 |
| BaO | 0 - 8 |
| ZnO | 1 - 10 |
| TiO₂ | 0 - 5 |
| ZrO₂ | 1 - 10 |
| Y₂O₃ | 1 - 8 |
| Yb₂O₃ | 0,1 - 5 |
| Gd₂O₃ | 0,1 - 5 |
| Nb₂O₅ | 0,1 - 10 |
| mit MgO + CaO + SrO + BaO | 0 - 10 |

Vorzugsweise weisen Gläser dieser ersten Klasse die folgende Zusammensetzung (in Gew.-% auf Oxidbasis) auf:

| | |
|---|---|
| La₂O₃ | 32 - 42 |
| B₂O₃ | 30 - 40 |
| PbO | 0,5 - 4 |
| MgO | 0 - 8 |
| CaO | 0 - 8 |
| SrO | 0 - 8 |
| BaO | 0 - 8 |
| ZnO | 2 - 8 |
| TiO₂ | 0 - 2 |
| ZrO₂ | 3 - 10 |
| Y₂O₃ | 1 - 5 |
| Yb₂O₃ | 0,5 - 2 |
| Gd₂O₃ | 0,1 - 3 |
| Nb₂O₅ | 4 - 10 |
| mit MgO + CaO + SrO + BaO | 0 - 10 |

Mehr bevorzugt liegen die Gläser der ersten Klasse im folgenden Zusammensetzungsbereich (in Gew.-% auf Oxidbasis):

| | |
|---|---|
| La₂O₃ | 32- 42 |
| B₂O₃ | 30 - 40 |
| PbO | 0,5 - 4 |
| MgO | 0 - 8 |
| CaO | 0 - 8 |
| SrO | 0 - 8 |
| BaO | 0 - 8 |
| ZnO | 2 - 8 |
| TiO₂ | 0 - 2 |
| ZrO₂ | 3 - 10 |
| Y₂O₃ | 1 - 5 |
| Yb₂O₃ | 0,5 - 2 |
| Gd₂O₃ | 0,1 - 3 |
| Nb₂O₅ | 4 - 10 |
| mit MgO + CaO + SrO + BaO | 0 - 10 |

Bei den Gläsern der ersten Klasse handelt es sich um besonders kristallisationsstabile und kostengünstige Gläser.

Bei der zweiten Klasse von Gläsern handelt es sich um GeO₂-haltige Gläser der folgenden Zusammensetzung (in Gew.-% auf Oxidbasis): La₂O₃ 35 - 50, bevorzugt 38 - 48; B₂O₃ 30 - 40; SiO₂ 0 - 8, bevorzugt 0 - 5; GeO₂ 0,1 - 15, bevorzugt 0,5 - 13, bevorzugt mit SiO₂ + GeO₂ 5 - 13; MgO 0 - 5, bevorzugt 0-2; CaO 0,1 - 7, bevorzugt 0,1 - 5; SrO 0 - 2; BaO 0,1 - 7, bevorzugt 0,1 - 5; ZnO 0 - 5, bevorzugt 0 - 3; ZrO₂ 0,1 - 8, bevorzugt 0,5 - 6; Y₂O₃ 0,1 - 6, bevorzugt 0,1 - 4; Gd₂O₃ 0 - 5, bevorzugt Gd₂O₃-frei; Nb₂O₅ 1 - 10, bevorzugt 3 - 7.

Diese Gläser besitzen Brechwerte n_{d} ≥ 1,70, Abbezahlen ν_{d} ≥ 45 und Dichten p ≤ 4,4 g/cm³. Mit den genannten bevorzugten Zusammensetzungsbereichen besitzen sie Brechwerte n_{d} ≥ 1, 72; Abbezahlen ν_{d} ≥ 47 und Dichten ρ ≤ 4,1 g/cm³. Die Gläser enthalten vorzugsweise maximal 10 Gew.-% an Erdalkalioxiden, insbesondere maximal 8 Gew.-%, ganz speziell maximal 6 Gew.-%.

Gläser dieser zweiten Klasse können beispielsweise die folgende Zusammensetzung (in Gew.-% auf Oxidbasis) aufweisen:

| | |
|---|---|
| La₂O₃ | 35 - 50 |
| B₂O₃ | 30 - 40 |
| SiO₂ | 0 - 8 |
| GeO₂ | 0,1 - 15 |
| MgO | 0 - 5 |
| CaO | 0,1 - 7 |
| SrO | 0 - 2 |
| BaO | 0,1 - 7 |
| ZnO | 0 - 5 |
| ZrO₂ | 0,1 - 8 |
| Y₂O₃ | 0,1 - 6 |
| Gd₂O₃ | 0 - 5 |
| Nb₂O₅ | 1 - 10 |

Vorzugsweise weisen Gläser dieser zweiten Klasse die folgende Zusammensetzung (in Gew.-% auf Oxibasis) auf:

| | |
|---|---|
| La₂O₃ | 38- 48 |
| B₂O₃ | 30 - 40 |
| SiO₂ | 0 - 5 |
| GeO₂ | 0,5 - 13 |
| mit SiO₂ + GeO₂ | 5 - 13 |
| MgO | 0 - 2 |
| CaO | 0,1 - 5 |
| SrO | 0 - 2 |
| BaO | 0,1 - 5 |
| ZnO | 0 - 3 |
| ZrO₂ | 0,5 - 6 |
| Y₂O₃ | 0,1 - 4 |
| Nb₂O₅ | 3 - 7 |

Die Gläser dieser zweiten Klasse weisen eine besonders vorteilhafte Kombination der Eigenschaften Dichte, Brechwert und Dispersion auf.

Eine dritte Klasse von Gläsern weist die folgenden Zusammensetzungsbereiche (in Gew.-% auf Oxidbasis) auf:

| | |
|---|---|
| La₂O₃ | 40 - 55 |
| B₂O₃ | 22 - 32 |
| SiO₂ | 1 - 8 |
| Al₂O₃ | 0 - 5 |
| MgO | 0 - 8 |
| CaO | 0 - 8 |
| SrO | 0 - 8 |
| BaO | 0 - 2 |
| ZnO | 0,5 - 6 |
| TiO₂ | 0 - 3 |
| ZrO₂ | 2 - 10 |
| Y₂O₃ | 3 - 11 |
| M₂O (M = Li, Na, K, Rb und/oder Cs) | 0 - 8 |

Vorzugsweise weist diese dritte Klasse von Gläsern die folgenden Zusammensetzungsbereiche (in Gew.-% auf Oxidbasis) auf:

| | |
|---|---|
| La₂O₃ | 45 - 50 |
| B₂O₃ | 26 - 29 |
| SiO₂ | 4 - 7 |
| BaO | 0 - 2 |
| ZnO | 2 - 5 |
| TiO₂ | 0 - 3 |
| ZrO₂ | 6 - 9 |
| Y₂O₃ | 7 - 10 |

Eine vierte Klasse von Gläsern weist die folgenden Zusammensetzungsbereiche (in Gew.-% auf Oxidbasis) auf:

| | |
|---|---|
| La₂O₃ | 10-16 |
| B₂O₃ | 1 - 8 |
| SiO₂ | 20 - 30 |
| Al₂O₃ | 0 - 3 |
| MgO | 0 - 8 |
| CaO | 20 - 30 |
| SrO | 0 - 8 |
| BaO | 0 - 8 |
| ZnO | 1 - 8 |
| TiO₂ | 3 - 11 |
| ZrO₂ | 0,5 - 6 |
| Nb₂O₅ | 10 - 18 |
| M₂O (M = Li, Na, K, Rb und/oder Cs) | 0 - 8 |

Vorzugsweise weist diese vierte Klasse von Gläsern die folgenden Zusammensetzungsbereiche (in Gew.-% auf Oxidbasis) auf:

| | |
|---|---|
| La₂O₃ | 12 - 16 |
| B₂O₃ | 3 - 7 |
| SiO₂ | 22 - 28 |
| Al₂O₃ | 0 - 1,5 |
| CaO | 20 - 27 |
| ZnO | 3 - 8 |
| TiO₂ | 6 - 11 |
| ZrO₂ | 2 - 6 |
| Nb₂O₅ | 12 - 16 |
| Li₂O | 0 - 1,5 |

Zur Verbesserung der Glasqualität können dem Gemenge zur Läuterung der Gläser ein oder mehrere an sich bekannte Läutermittel in den üblichen Mengen zugegeben werden. So wiesen die Gläser eine besonders gute innere Glasqualität bezüglich Blasen- und Schlierenfreiheit auf. Insbesondere können die Gläser 0 - 1,5 Gew.-% Sb₂O₃; 0 - 1,5 Gew.-% As₂O₃; 0 - 1,5 Gew.-% SnO₂; 0 - 1,5 Gew.-% CeO₂; 0 - 1,5 Gew.-% Cl⁻; 0 - 1,5 Gew.-% SO₄²⁻ enthalten, wobei bei Verwendung von mehr als einem dieser die Summe aus As₂O₃, Sb₂O₃, SnO₂, CeO₂, Cl⁻, SO₄²⁻ auch zwischen 0 und 1,5 Gew.-% betragen soll.

Die nachfolgenden Beispiele dienen der weiteren Veranschaulichung der vorliegenden Erfindung, schränken jedoch den Umfang der vorliegenden Erfindung ein.

### Beispiele:

Es wurden neun Beispiele erfindungsgemäßer Gläser aus üblichen Rohstoffen erschmolzen. In Tabelle 2 sind die jeweiligen Zusammensetzungen (in Gew.- % auf Oxidbasis) der Gläser, ihr Brechwert n_{d}, ihre Abbezahl ν_{d}, die Teildispersion im blauen Bereich des Spektrums P_{g,F} und die Anomalie dieser Teildispersion ΔP_{g,F} [10⁻⁴] aufgeführt. Weiter sind der thermische Ausdehnungskoeffizient α_{20/300} [10⁻⁶/K], die Transformationstemperatur Tg [°C], die Dichte ρ [g/cm³] und die Knoop-Härte [HK] angegeben. Der spektrale Reintransmissionsgrad τᵢ [%] bei einer Probendicke d=25mm (τᵢ₂₅ₘₘ) ist für die Wellenlängen λ 380 nm, 400 nm und 420 nm angegeben.

Die erfindungsgemäßen Gläser wurden folgendermaßen hergestellt: Die Oxide bzw. die Rohstoffe für die Oxide, bevorzugt Carbonate, Nitrate und/oder auch Fluoride, wurden abgewogen. Es wurde gut gemischt. Das Glasgemenge wurde bei ca. 1350 °C in einem kontinuierlichen Schmelzaggregat eingeschmolzen, danach bei ca. 1380 °C geläutert und homogenisiert. Bei einer Gußtemperatur von ca. 1140 °C wurde das Glas verarbeitet, z. B. gepresst oder gewalzt, definiert gekühlt und ggf. zu den gewünschten Abmessungen weiterver-arbeitet.

Tabelle 1 zeigt ein Schmelzbeispiel für 100 kg berechnetes Glas.

**Tabelle 1**

| Oxid | Gew.-% | Rohstoff | Einwaage [kg] |
|---|---|---|---|
| B₂O₃ | 35,0 | H₃BO₃ | 62,2 |
| La₂O | 33,0 | La₂O₃ | 33,0 |
| PbO | 3,0 | PbO | 3,0 |
| ZnO | 3,0 | ZnO | 3,0 |
| TiO₂ | 1,0 | TiO₂ | 1,0 |
| ZrO₂ | 10,0 | ZrO₂ | 10,0 |
| Y₂O₃ | 3,0 | Y₂O₃ | 3,0 |
| Gd₂O₃ | 2,0 | Gd₂O₃ | 2,0 |
| Nb₂O₅ | 10,0 | Nb₂O₅ | 10,0 |

Die Eigenschaften des so erhaltenen Glases sind in der Tabelle 2, Beispiel 4 angegeben.

In den Tabellen 2 und 3 sind die Zusammensetzungen der Gläser der Beispiele 1 bis 19 (jeweils in Gew.-%), sowie deren physikalische Eigenschaften angegeben.

**Tabelle 2**

| | **1** | **2** | **3** | **4** | **5** | **6** | **7** | **8** | **9** |
|---|---|---|---|---|---|---|---|---|---|
| La₂O₃ | 37,3 | 32,0 | 42,0 | 42,6 | 45,0 | 30,0 | 40,0 | 42,0 | 43,0 |
| B₂O₃ | 35,3 | 32,0 | 40,0 | 34,7 | 40,0 | 30,0 | 35,0 | 40,0 | 36,0 |
| SiO₂ | - | - | - | - | - | 2,5 | 6,0 | - | - |
| GeO₂ | - | - | - | 9,1 | 12,0 | 6,0 | 0,5 | 2,0 | 4,0 |
| PbO | 1,9 | 0,5 | 4,0 | - | - | - | - | - | - |
| Al₂O₃ | - | 5,0 | - | - | - | 4,0 | - | - | - |
| MgO | - | - | - | 0,7 | 0,4 | 2,0 | 1,5 | 2,0 | - |
| CaO | - | - | - | 1,1 | 0,1 | 5,0 | 3,0 | 0,5 | 1,0 |
| SrO | - | - | - | 1,0 | - | - | - | - | 2,0 |
| BaO | - | - | - | 1,4 | 0,1 | 4,5 | 3,0 | 0,5 | 2,0 |
| ZnO | 5,5 | 8,0 | 4,0 | 1,0 | 0,4 | 3,0 | 3,0 | 3,0 | - |
| TiO₂ | 0,1 | 4,5 | - | - | - | - | - | - | - |
| ZrO₂ | 7,8 | 3,0 | 3,0 | 2,6 | 0,5 | 1,0 | 2,0 | 5,0 | 4,0 |
| Y₂O₃ | 2,9 | 4,0 | 1,0 | 1,0 | 0,5 | 3,0 | 3,0 | 2,0 | 2,0 |
| Yb₂O₃ | 0,6 | 2,0 | 1,0 | - | - | - | - | - | - |
| Gd₂O₃ | 0,8 | 3,0 | 0,5 | - | - | - | - | - | - |
| Nb₂O₅ | 7,7 | 5,0 | 4,5 | 4,8 | 1,0 | 5,0 | 3,0 | 3,0 | 6,0 |
| K₂O | - | 1,0 | - | - | - | - | - | - | - |
| Na₂O | - | - | - | - | - | 4,0 | - | - | - |
| n_{d} | 1,779 | 1,775 | 1,760 | 1,749 | 1,713 | 1,746 | 1,729 | 1,733 | 1,748 |
| ν_{d} | 43,7 | 44,7 | 46,5 | 48,1 | 51,6 | 48,4 | 51,3 | 50,3 | 47,7 |
| P_{g;F} | 0,562 | 0,567 | 0,557 | 0,555 | 0,553 | 0,555 | 0,550 | 0,549 | 0,555 |
| ΔP_{g;F}[10⁻⁴] | -75 | -14 | -79 | -76 | -72 | -69 | -76 | -93 | -83 |
| α_{20/300} [10^{- 6}/K] | 6,3 | 6,4 | 6,5 | 6,5 | 6,9 | 7,5 | 7,0 | 6,4 | 6,5 |
| Tg[°C] | 643 | 635 | 628 | 656 | 648 | 636 | 648 | 644 | 655 |
| ρ[g/cm³] | 4,12 | 4,14 | 4,15 | 4,05 | 3,97 | 4,02 | 3,91 | 3,88 | 3,96 |
| Knoophärte [HK] | 740 | 770 | 770 | 720 | 730 | 720 | 730 | 740 | 730 |
| τᵢ₍₂₅ₘₘ₎ [%] | | | | | | | | | |
| Bei 380nm | 54,1 | 62,9 | 55,4 | 59,0 | 65,6 | 80,7 | 66,4 | 69,7 | 73,7 |
| 400nm | 73,7 | 80,3 | 70,8 | 75,4 | 78,7 | 88,4 | 81,0 | 82,6 | 84,1 |
| 420 nm | 83,5 | 87,5 | 80,9 | 84,8 | 86,3 | 91,8 | 88,5 | 88,3 | 89,3 |

**Tabelle 3**

| | **10** | **11** | **12** | **13** | **14** | **15** | **16** | **17** | **18** | **19** |
|---|---|---|---|---|---|---|---|---|---|---|
| La₂O₃ | 13,5 | 9,9 | 14,9 | 11,9 | 10,0 | 46,9 | 39,7 | 41,8 | 49,7 | 54,7 |
| B₂O₃ | 5,0 | 8,0 | 1,0 | 6,0 | 5,0 | 27,8 | 29,7 | 21,8 | 31,7 | 24,9 |
| SiO₂ | 25,0 | 19,8 | 29,8 | 24,8 | 28,6 | 5,3 | 1,0 | 8,0 | 4,0 | 7,8 |
| GeO₂ | - | - | - | - | - | - | - | - | - | - |
| pbO | - | - | - | - | - | - | - | - | - | - |
| Al₂O₃ | 0,5 | 3,0 | 3,0 | - | 1,0 | - | - | - | - | |
| MgO | - | 7,0 | - | - | 1,0 | - | 1,0 | - | 0,5 | - |
| CaO | 23,3 | 17,8 | 19,8 | 24,8 | 30,0 | - | - | - | - | - |
| SrO | - | - | - | - | - | - | - | - | - | - |
| BaO | - | - | - | - | - | 0,3 | 2,0 | 1,0 | 0,5 | - |
| ZnO | 5,0 | 8,0 | 8,0 | 5,0 | 1,0 | 3,3 | 6,0 | 6,0 | 0,5 | 4,0 |
| TiO₂ | 9,0 | 5,0 | 7,0 | 3,0 | 10,5 | 0,4 | 3,0 | - | 1,0 | 3,0 |
| ZrO₂ | 4,0 | 4,0 | 0,5 | 6,0 | 1,5 | 7,6 | 8,0 | 9,9 | 5,0 | 2,0 |
| Y₂O₃ | - | - | - | - | - | 8,3 | 8,0 | 10,9 | 6,5 | 3,0 |
| Yb₂O₃ | - | - | - | - | - | - | - | - | - | - |
| Gd₂O₃ | - | - | - | - | - | - | - | - | - | - |
| Nb₂O₅ | 14,0 | 16,4 | 14,9 | 17,9 | 9,9 | - | - | - | - | - |
| K₂O | - | - | 0,3 | - | - | - | 1,0 | 0,3 | - | - |
| Na₂O | - | 0,3 | - | 0,3 | 0,5 | - | 0,3 | - | 0,3 | 0,3 |
| Li₂O | 0,7 | 0,5 | 0,5 | - | 0,5 | - | - | - | - | - |
| Sb₂O₃ | - | 0,3 | 0,3 | 0,3 | 0,4 | 0,1 | 0,3 | 0,3 | 0,3 | 0,3 |
| n_{d} | 1,801 | 1,782 | 1,776 | 1,780 | 1,763 | 1,773 | 1,782 | 1,791 | 1,760 | 1,782 |
| ν_{d} | 35,08 | 36,70 | 36,17 | 37,61 | 36,69 | 49,62 | 45,36 | 47,58 | 49,82 | 46,24 |
| P_{g;F} | | | | | | | | | | |
| ΔP_{g;F}[10⁻⁴] | | | | | | | | | | |
| α_{20/300}[10^{- 6}/K] | 8,6 | 8,7 | 8,0 | 8,4 | 8,8 | 7,0 | 7,1 | 7,3 | 7,1 | 7,3 |
| Tg[°C] | 651 | 620 | 669 | 665 | 663 | 668 | 639 | 660 | 662 | 654 |
| ρ[g/cm³] | 3,60 | 3,60 | 3,63 | 3,63 | 3,37 | 4,24 | 4,19 | 4,39 | 4,16 | 4,32 |
| Knoophärte [HK] | 670 | 610 | 700 | 650 | 650 | 770 | 720 | 750 | 730 | 730 |
| τᵢ₍₂₅ₘₘ₎ [%] | | | | | | | | | | |
| Bei 380nm | | | | | | | | | | |
| 400nm | | | | | | | | | | |
| 420 nm | | | | | | | | | | |

Die erfindungsgemäßen Gläser der Glasarten Lanthankronglas, Lanthanflintglas und Lanthanschwerflintglas besitzen bei den genannten hohen Abbezahlen und hohen Brechwerten mit ρ ≤ 4,5 g/cm³ eine für diese optischen Lagen niedrige Dichte.

Sie besitzen eine sehr gute Blau- und UV-Transmission, insbesondere auch im Vergleich mit den bekannten Gläsern dieser optischen Lage.

Aufgrund ihrer schichtbindenden Komponenten sind die Gläser gut mit organischen Materialien beschichtbar, und die aufgetragenen Schichten haften sehr gut am Glas.

Die Gläser sind leicht zu schmelzen und gut zu verarbeiten. Ihre Kristallisationsstabilität, Schmelzbarkeit und Viskositätskennlinie machen ihre Fertigung im kontinuierlichen Aggregat möglich.

Sie sind aufgrund ihres Eigenschaftsprofils hervorragend geeignet für die Verwendung als Komponentenglas in optischen Datentransfersystemen, insbesondere als Basisglas für Pick-up-Linsen.

## Patentansprüche

1. Optisches Element für Vorrichtungen für optischen Datentransfer, umfassend ein Glas mit einem Brechwert n_{d} ≥ 1,70, einer Abbezahl υ_{d} ≥ 35 und einer Dichte ρ ≤ 4,5 g/cm³.

2. Optisches Element nach Anspruch 1, wobei die Abbezahl υ_{d} ≥ 40 beträgt.

3. Optisches Element nach Anspruch 1 oder 2, wobei die Dichte ρ ≤ 4,3 g/cm³ beträgt.

4. Verwendung eines optischen Glases mit einem Brechwert n_{d} ≥ 1,70, einer Abbezahl υ_{d} ≥ 35 und einer Dichte ρ ≤ 4,5 g/cm³ für optischen Datentransfer.

5. Verwendung nach Anspruch 4 für Read&Write-Anwendungen.

6. Verwendung nach Anspruch 4 oder 5 für Read&Write-Vorrichtungen mit mechanisch beweglichen Schreib-Lese-Köpfen.

7. Optische Gläser mit einem Brechwert n_{d} ≥ 1,71, einer Abbezahl ν_{d} ≥ 39 und einer Dichte ρ ≤ 4,7 g/cm³, umfassend folgende Zusammensetzung (in Gew.-% auf Oxidbasis):
| | |
|---|---|
| La₂O₃ | 30 - 45 |
| B₂O₃ | 30 - 40 |
| PbO | 0,1 - 5 |
| MgO | 0 - 8 |
| CaO | 0 - 8 |
| SrO | 0 - 8 |
| BaO | 0 - 8 |
| ZnO | 1 - 10 |
| TiO₂ | 0 - 5 |
| ZrO₂ | 1 - 10 |
| Y₂O₃ | 1 - 8 |
| Yb₂O₃ | 0,1 - 5 |
| Gd₂O₃ | 0,1 - 5 |
| Nb₂O₅ | 0,1 - 10 |
| mit MgO + CaO + SrO + BaO | 0 - 10 |

8. Optische Gläser nach Anspruch 7, umfassend folgende Zusammensetzung (in Gew.-% auf Oxidbasis)
| | |
|---|---|
| La₂O₃ | 30 - 45 |
| B₂O₃ | 30 - 40 |
| PbO | 0,1 - 5 |
| MgO | 0 - 8 |
| CaO | 0 - 8 |
| SrO | 0 - 8 |
| BaO | 0 - 8 |
| ZnO | 1 - 10 |
| TiO₂ | 0 - 5 |
| ZrO₂ | 1 - 10 |
| Y₂O₃ | 1 - 8 |
| Yb₂O₃ | 0,1 - 5 |
| Gd₂O₃ | 0,1 - 3 |
| Nb₂O₅ | 2 - 10 |
| mit MgO + CaO + SrO + BaO | 0 - 10 |

9. Optische Gläser nach Anspruch 7 oder 8, umfassend die folgende Zusammensetzung (in Gew.-% auf Oxidbasis):
| | |
|---|---|
| La₂O₃ | 32 - 42 |
| B₂O₃ | 30 - 40 |
| PbO | 0,5 - 4 |
| MgO | 0 - 8 |
| CaO | 0 - 8 |
| SrO | 0 - 8 |
| BaO | 0 - 8 |
| ZnO | 2 - 8 |
| TiO₂ | 0 - 2 |
| ZrO₂ | 3 - 10 |
| Y₂O₃ | 1 - 5 |
| Yb₂O₃ | 0,5 - 2 |
| Gd₂O₃ | 0,1 - 3 |
| Nb₂O₅ | 4 - 10 |
| mit MgO + CaO + SrO + BaO | 0 - 10 |

10. Optische Gläser mit einem Brechwert n_{d} ≥ 1,71, einer Abbezahl ν_{d} ≥ 39 und einer Dichte ρ ≤ 4,7 g/cm³, umfassend folgende Zusammensetzung (in Gew.-% auf Oxidbasis):
| | |
|---|---|
| La₂O₃ | 35 - 50 |
| B₂O₃ | 30 - 40 |
| SiO₂ | 0 - 8 |
| GeO₂ | 0,1 - 15 |
| MgO | 0 - 5 |
| CaO | 0,1 - 7 |
| SrO | 0 - 2 |
| BaO | 0,1 - 7 |
| ZnO | 0 - 5 |
| ZrO₂ | 0,1 - 8 |
| Y₂O₃ | 0,1 - 6 |
| Gd₂O₃ | 0 - 5 |
| Nb₂O₅ | 1 - 10 |

11. Optische Gläser nach Anspruch 10, umfassend die folgende Zusammensetzung (in Gew.-% auf Oxidbasis):
| | |
|---|---|
| La₂O₃ | 38 - 48 |
| B₂O₃ | 30 - 40 |
| SiO₂ | 0 - 5 |
| GeO₂ | 0,5 - 13 |
| mit SiO₂ + GeO₂ | 5 - 13 |
| MgO | 0 - 2 |
| CaO | 0,1 - 5 |
| SrO | 0 - 2 |
| BaO | 0,1 - 5 |
| ZnO | 0 - 3 |
| ZrO₂ | 0,5 - 6 |
| Y₂O₃ | 0,1 - 4 |
| Nb₂O₅ | 3 - 7 |

12. Optische Gläser nach einem der Ansprüche 8 bis 11, weiter enthaltend die folgenden Komponenten (in Gew.-% auf Oxidbasis):
| | |
|---|---|
| Al₂O₃ | 0 - 5 |
| Li₂O + Na₂O + K₂O + Rb₂O + Cs₂O | 0 - 10 |

13. Optische Gläser nach einem der Ansprüche 8 bis 12, enthaltend 0 - 10 Gew.-% Li₂O + Na₂O + K₂O, insbesondere 0 - 8 Gew.-% Li₂O + Na₂O + K₂O.

14. Optische Gläser nach einem der Ansprüche 8 bis 13, weiter enthaltend (in Gew.-% auf Oxidbasis):
| | |
|---|---|
| As₂O₃ | 0 - 1,5 |
| Sb₂O₃ | 0 - 1,5 |
| SnO₂ | 0 - 1,5 |
| CeO₂ | 0 - 1,5 |
| Cl⁻ | 0 - 1,5 |
| F | 0 - 1,5 |
| SO₄²⁻ | 0 - 1,5 |
| mit Sb₂O₃+ As₂O₃ + SnO₂ + CeO₂ + Cl⁻ + F⁻ + SO₄²⁻ | 0 - 1,5 |
